# EUROPEAN PATENT APPLICATION

(11) **EP 4 019 172 A1**
(43) Date of publication of application: **29.06.2022**
(21) Application number: 21163814.3
(22) Date of filing: 19.03.2021
(51) Int. Cl.: B22F 12/33, B22F 12/80, B33Y 10/00, B33Y 30/00, B33Y 40/00, B23K 9/04, B22F 10/25

(54) **ADDITIVE MANUFACTURING METHOD AND APPARATUS**

(30) Priority: 23.12.2020 EP 20216869
(71) Applicant: Siemens Gamesa Renewable Energy A/S, 7330 Brande (DK); Siemens Gamesa Renewable Energy GmbH & Co. KG, 20097 Hamburg (DE)
(72) Inventor: Plett, Oliver, 83024 Rosenheim (DE); Azar, Ziad, Sheffield, South Yorkshire S10 4ED (GB)
(74) Representative: Aspacher, Karl-Georg

(57) **Abstract**

An additive manufacturing apparatus (10) comprises:
- at least one carriage (100) having an additive manufacturing tool (110) for depositing a metallic material on a deposition surface (5010),
- at least one guide (200) coupled with the carriage (100) and comprising at least one guiding path (210) defined from a path initial point (211) and a path final point (212), the carriage (100) being movable along the guiding path (210) from the path initial point (211) to the path final point (212) and from the path final point (212) to the path initial point (211),
- a height regulation device (301, 302) comprised in the carriage (100) or in the guide (200) for changing the distance between the additive manufacturing tool (110) and the deposition surface (500).

## Description

### Field of invention

The present invention relates to the field of additive manufacturing for metal products.

### Art Background

In the above defined technical field, Plasma Additive Wire Manufacturing, or Laser Wire or Powder Additive Manufacturing or Wire Arc Additive Manufacturing (WAAM) 3D metal technologies are known and integrated into CNC or robotic applications. Such kind of implementations still involve high costs. Main cost-drivers are the hardware and software integration of the above-mentioned technologies.

Goal of the present invention is to overcome such inconvenience by providing a low-cost 3D metal printer based on the WAAM or Plasma Arc Additive Manufacturing or Laser Arc Additive Manufacturing or similar technology.

### Summary of the Invention

This objective may be solved by the permanent electrical machine according to the independent claims. Advantageous embodiments of the present invention are described by the dependent claims.

According to a first aspect of the present invention an additive manufacturing apparatus is provided, which comprises:
- at least one carriage having an additive manufacturing tool for depositing a metallic material on a deposition surface,
- at least one guide coupled with the carriage and comprising at least one guiding path defined from a path initial point and a path final point, the carriage being movable along the guiding path from the path initial point to the path final point and from the path final point to the path initial point,
- a height regulation device comprised in the carriage or in the guide for changing the distance between the additive manufacturing tool and the deposition surface.

According to a second aspect of the present invention a method for additive manufacturing is provided, which comprises the steps of:
- providing at least one carriage having an additive manufacturing tool for depositing a metallic material on a deposition surface,
- guiding the carriage along at least one guiding path from a path initial point to a path final point, the distance between the additive manufacturing tool and the deposition path being held constant, the additive manufacturing tool being activated for depositing a first layer of metallic material,
- changing the distance between the additive manufacturing tool and the deposition surface and repeating at least one time the previous step for depositing at least a second layer of metallic material, in order to form a metallic object comprising a plurality of layers, each layer being deposited over a previous layer.

According to the present invention at least one carriage having an additive manufacturing tool is guided along a at least one guiding path for manufacturing a multilayer metallic object. The manufacturing can be automatized, so that the carriage is used for depositing on layer or metallic material when moving from the path initial point to the path final point. After a deposition phase the carriage may be guided again to the path initial point for the deposition of a further layer over the previous one. Between the deposition of the two subsequent layers, the distance between the manufacturing tool and the deposition surface, on which the metallic object being manufactured lies, is changed. The path initial point may be identified as the point on the guide, at which the deposition of the layer is started. The path final point may be identified as the point on the guide, at which the deposition of the layer is ended. The path initial point and the path final point may be coincident or arranged close enough to each other in such a way that a layer having a closed path geometry may be deposited. The manufacturing tool may be any tool capable of depositing a layer of metallic material while the carriage is guided along the guiding path. A plurality of deposition technologies may be used including Wire Arc Additive Manufacturing (WAAM), Plasma Arc Additive Manufacturing, Laser Wire Additive Manufacturing or Laser Powder Additive Manufacturing.

With the present invention a metallic object of complex geometric may be manufactured by using the above-mentioned technologies, thus permitting to achieve a significant reduction in manufacturing costs with respect to other technologies, involving for example the use of CNC or robotic apparatuses and/or methods. Further advantages of the present invention are:
- all weldable materials can be deposited,
- there are no size limits for the object to be formed as the guide can be accordingly dimensioned,
- the deposition surface may be a horizontal, a vertical or an over-head plane. The deposition surface may be also a curved surface, for example a cylindrical surface,
- the apparatus of the present invention is easily transportable due to low weight and modularity.

According to embodiments of the present invention the guide may include a guiding surface and a guiding track. The guiding surface may be any surface on which the carriage is supported and may move between the path initial point and the path final point. The guiding surface may be a planar surface or any curved surface. The guiding surface may include supports for being placed over the deposition surface.

According to embodiments of the present invention the guide, the carriage may comprise a frame on which the additive manufacturing tool is mounted. First sliding (for example runners or similar devices) or rolling device (for example wheels, rollers or similar devices) may be attached to the frame for coupling the carriage with the guiding surface and guiding the carriage along the guiding path.

According to other embodiments of the present invention, the guide may include only a guiding surface or a guiding track.

In embodiment where a guiding track is comprised, the guiding track may be a rail, for example fixed on the guiding surface or a slot, for example provided on the guiding surface. The guiding track provides geometrical constraints for guiding the carriage between the path initial point and the path final point. Second sliding (for example one or more pins or similar device inserted in a slot provided on the guiding surface) or rolling device (for example wheels or rollers or similar devices coupled with the rail) may be attached to the frame for coupling the carriage with the guiding track and guiding the carriage along the guiding path.

The guiding path may be defined along the guiding track by setting two respective positions on the guiding track to respectively define the path initial point and the path final point. According to embodiments of the present invention, switches may be provided along the guiding track for defining the path initial point and the path final point. A first switch may be provided along the guiding track for activating the manufacturing tool at the path initial point. A second switch may be provided along the guiding track for deactivating the manufacturing tool at the path final point. The switches may be mechanical or electrical or optical contacts, which are activated or deactivated when the carriage passes through or on proximity to it. The switches may be activated by the second sliding or rolling devices.

The height regulation device changes the distance between the additive manufacturing tool and the deposition surface. The height regulation device is activated after one layer has been deposited. The change of the distance between the additive manufacturing tool and the deposition surface permits depositing a subsequent layer over the previous one. A further regulation in a direction transversal to the height regulation may be provided so that the subsequent layer has a slight offset with respect to the previous one. The offset between layer may be used for crating object which are inclined with respect to the deposition surface. The inclination angle between the object and the deposition surface may be comprised between 45 and 90 degrees.

According to embodiments of the present invention, the height regulation device is provided on the guide. For example, height regulation device may be included in the supports of the guiding surface to change the height of such supports and therefore the distance between the guiding surface and the deposition surface.

According to embodiments of the present invention, the height regulation device is provided on the carriage. The height regulation device may include a lifting device for changing the distance between the additive manufacturing tool and the frame. Additionally, or alternatively, the height regulation device may include a lifting device for changing the distance between the frame and the guiding surface, for example by acting on a suspension provide between the frame and the first sliding or rolling devices.

According to embodiments of the present invention, the same carriage may be guided along a plurality of guiding paths, each having respective path initial points and the path final points. The carriage may be guided through the plurality of guiding paths in series. At the end of one guiding path the deposition tool is deactivated and then again activated when the carriage reaches the path initial point of the subsequent guiding path. A plurality of guiding paths may be used to produce a plurality of respective objects, for example a plurality of parallel guiding paths may be used for producing a plurality of parallel objects. Alternatively, a plurality of guiding paths may be used to produce a plurality of portions of the same objects.

According to embodiments of the present invention, the track is closed and include a first track portion for guiding the carriage from the path initial point to the path final point and a second track portion for guiding the carriage from path final point to the path initial point. In such closed circuit one or more carriages may be guided first from the path initial point to the path final point for depositing a metallic layer. When reaching the path final point, the deposition tool is deactivated, the height regulation device is used for changing the distance between the additive manufacturing tool and the deposition surface and the carriage is driven again to the path initial point at which the deposition tool is activated again for deposition a subsequent layer.

According to embodiments of the present invention, the apparatus comprises a plurality of carriages. The carriages may be active on the same guiding path(s) for reducing the time for producing a single object. For example, two carriages may be used in closed circuit, where a first carriage may be used to deposit a layer, over which a subsequent layer is deposited by a second carriage, over which a further layer is deposited by the first carriages. Similarly, three or more carriages may be used in closed circuit. According to one embodiment, the carriages may be active on respective guiding paths for depositing respective layers at the same time. In the latter embodiment each carriage and guiding path may be dedicated to a respective portion of the same object.

Combinations of the above embodiments having pluralities of carriages and guiding paths may be implemented. For example, one apparatus may comprise a a plurality of carriages arranged in closed circuit and at least another guiding path in open circuit where one or more other carriages operates.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic axonometric view of a first embodiment of an additive manufacturing apparatus according to the present invention.
Fig. 2 shows a schematic axonometric view of a second embodiment of an additive manufacturing apparatus according to the present invention.
Fig. 3 shows a schematic axonometric view of a third embodiment of an additive manufacturing apparatus according to the present invention.
Fig. 4 shows a magnified detail of the third embodiment of Fig. 3.
Fig. 5 shows a schematic axonometric view of a fourth embodiment of an additive manufacturing apparatus according to the present invention.
Fig. 6 shows a magnified detail of the fourth embodiment of Fig. 5.
Fig. 7 shows a schematic axonometric view of a fifth embodiment of an additive manufacturing apparatus according to the present invention.
Fig. 8 shows a magnified detail of the fifth embodiment of Fig. 7.
Fig. 9 shows a schematic axonometric view of a sixth embodiment of an additive manufacturing apparatus according to the present invention.
Fig. 10 shows a magnified detail of the sixth embodiment of Fig. 9.

### Detailed Description

The illustrations in the drawings are schematically. It is noted that in different figures, similar or identical elements are provided with the same reference signs.

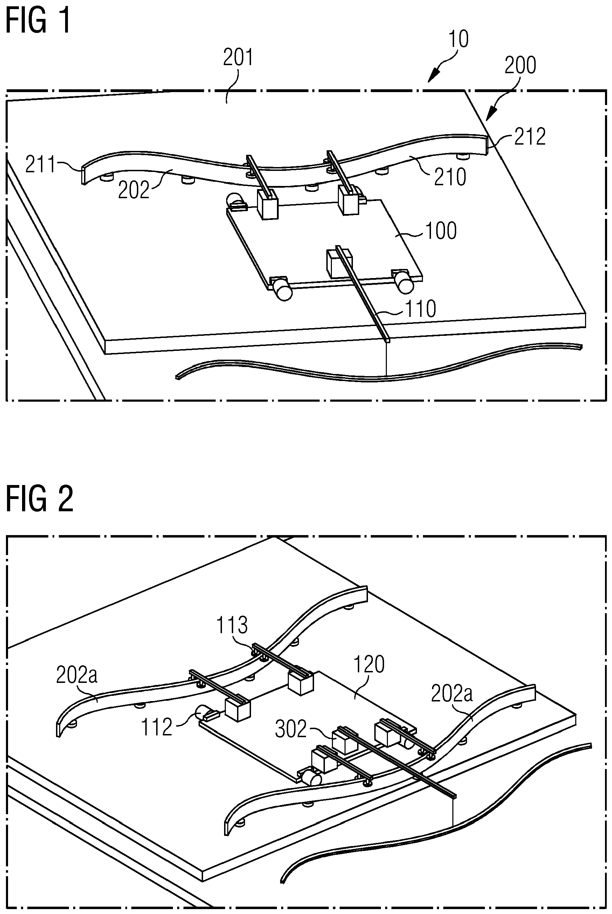

**Figure 1** shows a first embodiment first embodiment of an additive manufacturing apparatus 10. The apparatus 10 is usable for depositing a metallic material on a deposition surface 500. The metallic material is deposited through at least one carriage 100 to form a metallic object 400 on the deposition surface 500, the metallic object 400 comprising a plurality of layers, each layer being deposited over a previous layer.

The carriage 100 comprises an additive manufacturing tool 110 for depositing the metallic material on the deposition surface 500. The manufacturing tool 110 may be any of a Wire Arc Additive Manufacturing (WAAM) tool or a Plasma Arc Additive tool or a Manufacturing or Laser Wire Additive Manufacturing tool or Laser Powder Additive Manufacturing tool. Other manufacturing tool may be used according to the present invention, according to other technologies, which permits to deposit a layer of metallic material. The carriage 100 comprises a frame 120 on which the additive manufacturing tool 110. The carriage 100 further comprises four wheels 112 rotatably attached to the frame 120. According to other the embodiment of the present invention, a different number of wheels may be provided or, instead of the wheels, other sliding (for example runners) or rolling devices (for example rollers, may be attached to the frame 120.

The manufacturing apparatus 10 comprises one or more guides 200 coupled with the carriage 100. Each guide 200 comprises at least one guiding path 210 defined from a path initial point 211 and a path final point 212. The carriage 100 is movable along the guiding path 210 from the path initial point 211 to the path final point 212 and from the path final point 212 to the path initial point 211.

In the embodiment of figure 1, the guide 200 comprises a guiding surface 201 and a guiding track 202. The guiding surface 201 is a planar surface provided on a base of the manufacturing apparatus 10 which is subject to lie directly on the deposition surface 500. According to other the embodiment of the present invention (not shown), the guiding surface 201 may not be planar, for example the guiding surface 201 may be curved. The carriage 100 is coupled with the guiding surface 201 by means of the wheels 112. The wheels allow guiding the carriage 100 on the guiding surface 201 along the guiding path 210.

In the embodiment of figure 1, the guiding track 202 comprises one rail 202a fixed on the guiding surface 201. The guiding path 210 is defined along the guiding track 202, the guiding track 202 extending from one to the other of the path initial point 211 and a path final point 212. The carriage 1000 comprises second sliding or rolling device 113 (two set of rollers 113 according to the embodiment of figure 1) coupled with the rail 202a for guiding the carriage 100 along the guiding path 210.

The manufacturing apparatus 10 comprises a height regulation device 302 comprised in the carriage 100 for changing the distance between the additive manufacturing tool 110 and the deposition surface 500. The height regulation device 302 may comprises a lifting device mounted between the additive manufacturing tool 110 and the frame 120 for changing the distance between the additive manufacturing tool 110 and the frame 120 and therefore also the distance between the manufacturing tool 110 and the deposition surface 500. Alternatively, or additionally, the height regulation device 302 may comprise a lifting device for changing the distance between the frame 120 and the guiding surface 201. For example, the distance between the frame 120 and the guiding surface 201 may be changed by regulating one or more suspensions provided between the frame 120 and the wheels 112

In order to form a metallic object 400 over the deposition surface 500, the metallic object 400 comprising a plurality of layers, each layer being deposited over a previous layer, the following manufacturing steps are performed:
- the carriage 100 is guided along the guiding path 210 from the path initial point 211 to the path final point 212, the distance between the additive manufacturing tool 110 and the deposition surface 500 being held constant, the additive manufacturing tool 110 being activated while the carriage moves from the path initial point 211 to the path final point 212 for depositing a first layer of metallic material,
- when the carriage 100 reaches the path final point 212 the layer is complete ant the manufacturing tool 110 is deactivated,
- the distance between the additive manufacturing tool 110 and the deposition surface 500 is changed and the carriage 100 is guided along the guiding path 210 from the path final point 212 to the path initial point 211,
- the carriage 100 is guided along the guiding path 210 from the path initial point 211 to the path final point 212 depositing a second layer of metallic material over the first layer of metallic material.

The steps above may be repeated for a desired number of times, each time for depositing a corresponding layer of metallic material over the previous layer of metallic material.

A further regulation in a direction transversal to the height regulation may be provided so that the subsequent layer has a slight offset with respect to the previous one. The offset between layer may be used for crating object which are inclined with respect to the deposition surface 500. The inclination angle between the object and the deposition surface may be comprised between 45 and 90 degrees.

The above steps may be performed automatically repeating the sequence for N times, in order to deposit a plurality N layer of metallic material. The apparatus 10 may comprised a controller, which is programmed for executing the above-described steps. The controller may be included in the carriage 100.

**Figure 2** shows a second embodiment first embodiment of an additive manufacturing apparatus 10. The second embodiment differentiates itself from the first embodiment, for the fact that the guiding track 202 comprises two rails 202a. The carriage 1000 comprises additional rolling device 113 (two further set of rollers 113 according to the embodiment of figure 2) coupled with the second rail 202a for guiding the carriage 100 along the guiding path 210. The carriage 100 is coupled with the rails 202a at respective opposite sides of the carriage 100, in such a way that the carriage 100 moves along the guiding path 210 in the area of the guiding surface 201 comprised between the rails 202a.

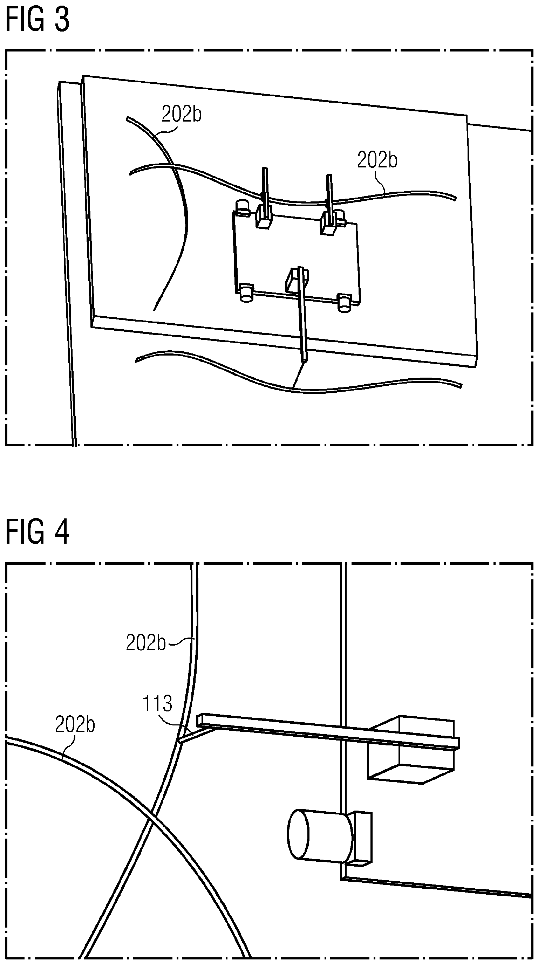

**Figures 3** and **4** show a third embodiment of the additive manufacturing apparatus 10. The third embodiment differentiates itself from the first embodiment, for the fact that the guiding track 202 one or more slots 202b (two slots 202b in the embodiments of the figures 3 and 4). A guiding path 210 is defined along each slot 202b, the slot 202b including the path final point 212 to the path initial point 211. The carriage 100 comprises a second sliding device 113 in the form of a pin coupled with the two rails 202b for guiding the carriage 100 along respective guiding paths 210. A plurality of guiding paths may be used to produce a plurality of respective objects. Alternatively, a plurality of guiding paths may be used to produce a plurality of portions of the same objects.

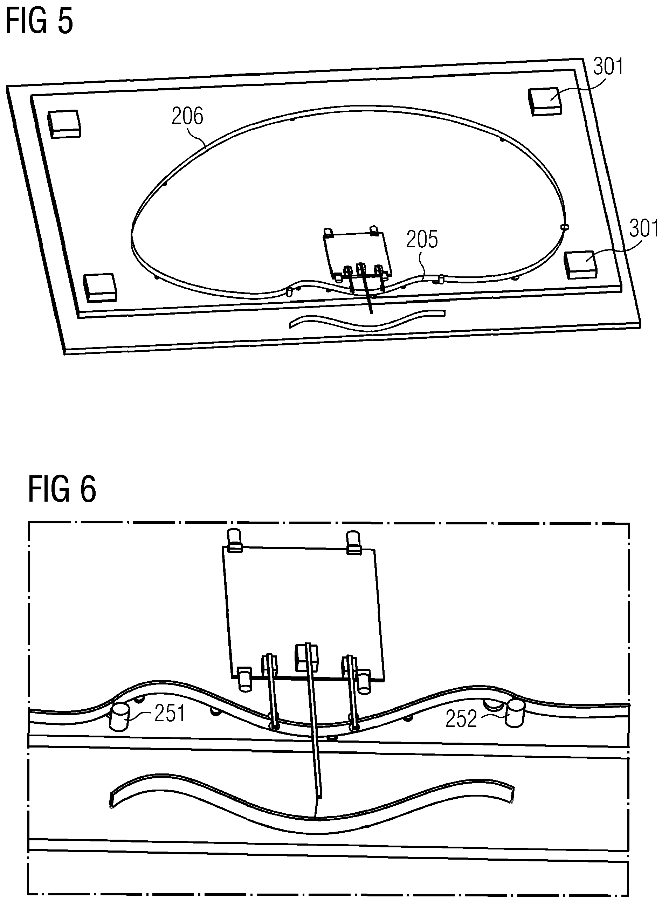

**Figures 5** and **6** show a fourth embodiment of the additive manufacturing apparatus 10. The fourth embodiment differentiates itself from the first embodiment, for the fact that wherein the track 202 is closed and include a first track portion 205 for guiding the carriage 100 from the path initial point 211 to the path final point 212 and a second track portion 206 for guiding the carriage 100 from the path final point 212 to the path initial point 211. The guide 200 comprises at least a first switch 251 for activating the manufacturing tool 110 at the path initial point 211 and at least a second switch 252 for deactivating the manufacturing tool 110 at the path final point 212. The carriage 100 may be driven along the track 202 continuously. The carriage 100 may move along the first track portion 205 while the manufacturing tool 110 is activated for depositing a layer of metallic material. When the carriage 100 reaches the path final point 212 the second switch 252 identifies the presence of the carriage 100 and deactivate the manufacturing tool 110. The carriage continues to move second track portion 206, while the height regulation device 301, 302 is activated for changing the distance between the additive manufacturing tool 110 and the deposition surface 500. When the carriage 100 reaches again the path initial point 211 the first switch 252 identifies the presence of the carriage 100 and activate again the manufacturing tool 110 for depositing a further layer of metallic material over the previous one. According to other variants of the fourth embodiment (not shown), the apparatus comprises a plurality of carriages 100. The carriages are active on the same closed track 202. The carriages move in series one after the other, each for depositing a respective layer over a previous layer, deposited by the previous carriage of the series. According to variants of the fourth embodiment (not shown), the second track portion 206 can be made as small as possible in order that the path initial point 211 and the path final point 212 are as close to each other as possible. According to a possible variant, the path initial point 211 and the path final point 212 may be made coincident. Such variants may be used to form layers having a closed geometry and consequently metallic objects 400 having a closed geometry. The fourth embodiment differentiates itself from the first embodiment also for the fact that the height regulation device 301 comprises a lifting device interposed between the guiding surface 201 and the deposition surface 500 for changing the distance between the guiding surface 201 and the deposition surface 500. The base on which the guiding surface 201 have supports for contacting the deposition surface 500 on which height regulation device 301 is provided. In the embodiment of the present invention, a height regulation device 301 active on the guiding surface 201 may be used alternatively or in combination with a height regulation device 302 provided on the carriage 100.

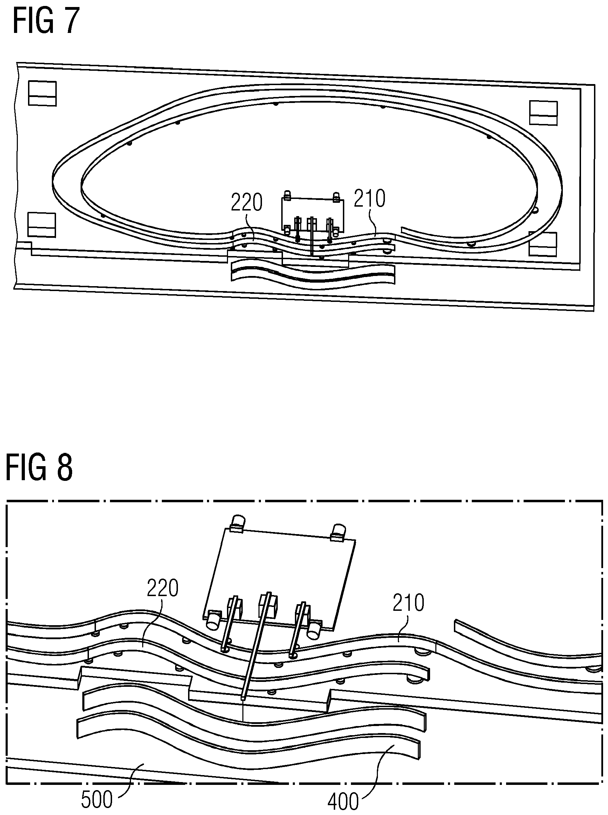

**Figures 7** and **8** show a fifth embodiment of the additive manufacturing apparatus 10. The fifth embodiment differentiates itself from the first embodiment in that the guide 200 comprises a plurality of guiding paths 210, 220, the carriage 100 being guided along the plurality of guiding paths 210, 220 in series. Each guiding paths 210, 220 have a respective path initial point 211 and a respective path final point 212. The carriage 100 moves first along a first guiding path 210 for depositing a layer of metallic material of a first metallic object 400. When the carriage 100 reaches the path final point 212 of the first guiding path 210, the manufacturing tool 110 is deactivated. When the carriage 100 reaches the path initial point 211 of the second guiding path 220, the manufacturing tool 110 is again activated for depositing a layer of metallic material of a second metallic object 400. After that the carriage 100 is guided upwards before the path initial point 211 of the first guiding path 210 for repeating the procedure after the distance between the deposition toll 110 and the deposition surface 500 has been changed. Each time the procedure is repeated two layer are deposited respectively over the two layer deposited in the previous execution of the procedure. According to other variants of the fifth embodiment (not shown), the guide 200 comprises more than two guiding paths. The plurality of guiding paths may be parallel to each other in order to form parallel metallic object 400 over the same deposition surface. According to other variants of the fifth embodiment (not shown), the guide 200 comprises a plurality of guiding paths 210, 220 arranged along a closed track 202, like the track of the fourth embodiment (figures 5 and 6)

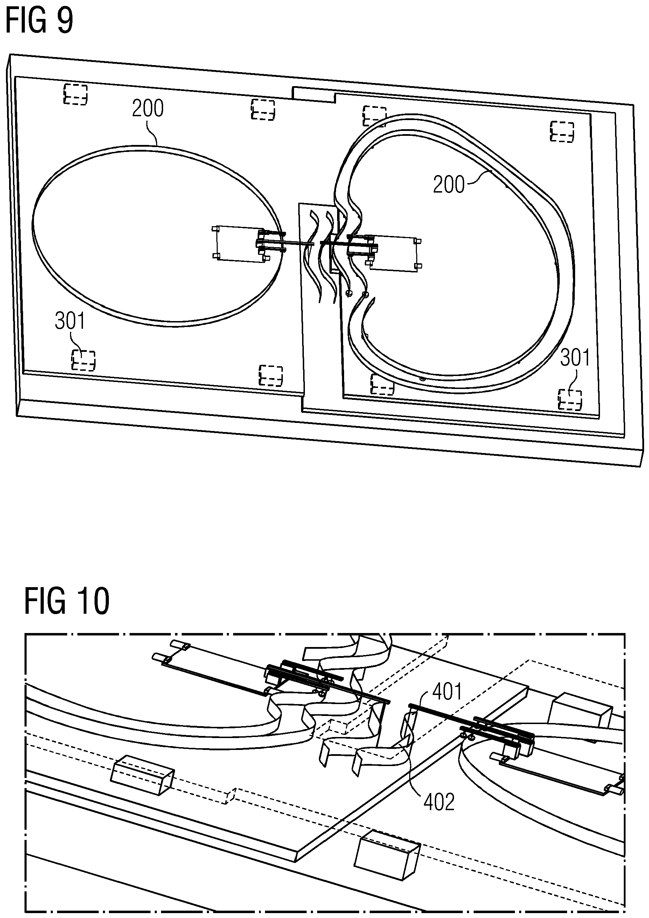

**Figures 9** and **10** show a sixth embodiment of the additive manufacturing apparatus 10. Such sixth embodiment is a combination of the fourth and fifth embodiment, as it comprises two guides 200, respectively comprising a closed track and a plurality of deposition path. The two guides are positioned at opposite sides of the same portion of the deposition surface 500 on which a metallic object 400 is to be formed. Both guides are used to form the same object, each guide being used to form a respective part or portion 401, 402 of the same metallic object 400. According to other variants of the fifth embodiment (not shown), the two guides 200 shown in figures 9 and 10 could be combined in a single one guide or be connected. In the latter embodiment on or more carriages 100 may be active at a first side of the deposition surface 500 for forming a layer of a first respective part or portion 401 of the metallic object 400, then move to a second side of the deposition surface 500 for forming a layer of a second respective part or portion 402 of the metallic object 400 and then go back to the first side to repeat the above procedure by depositing further layers of the part or portion 401, 402 of the metallic object 400 over the previous deposited layers.

## Claims

1. An additive manufacturing apparatus (10) comprising:
- at least one carriage (100) having an additive manufacturing tool (110) for depositing a metallic material on a deposition surface (500),
- at least one guide (200) coupled with the carriage (100) and comprising at least one guiding path (210) defined from a path initial point (211) and a path final point (212), the carriage (100) being movable along the guiding path (210) from the path initial point (211) to the path final point (212) and from the path final point (212) to the path initial point (211),
- a height regulation device (301, 302) comprised in the carriage (100) or in the guide (200) for changing the distance between the additive manufacturing tool (110) and the deposition surface (500).

2. The additive manufacturing apparatus (10) according to claim 1, wherein the guide (200) includes a guiding surface (201) and/or a guiding track (202).

3. The additive manufacturing apparatus (10) according to claim 2, wherein the guiding track (202) comprises at least a rail (202a) fixed on the guiding surface (201) or at least a slot (202b) provided on the guiding surface (201).

4. The additive manufacturing apparatus (10) according to claim 2 or 3, wherein the guiding path (210) is defined along the guiding track (202).

5. The additive manufacturing apparatus (10) according to any of the claims 2 to 4, wherein the height regulation device (301) comprises a lifting device for changing the distance between the guiding surface (201) and the deposition surface (500).

6. The additive manufacturing apparatus (10) according to any of the claims 2 to 5, wherein the carriage (100) comprises a frame (120) on which the additive manufacturing tool (110) is mounted, at least a first and a second sliding or rolling device (112, 113) respectively coupled with the guiding surface (201) and the guiding track (202) for guiding the carriage (100) along the guiding path (210).

7. The additive manufacturing apparatus (10) according to claims 6, wherein the height regulation device (302) comprises a lifting device for changing the distance between the additive manufacturing tool (110) and the frame (120) or a lifting device for changing the distance between the frame (120) and the guiding surface (201).

8. The additive manufacturing apparatus (10) according to any of the previous claims, wherein one guide (200) guides the carriage (100) along a plurality of guiding paths (210, 220) .

9. The additive manufacturing apparatus (10) according to any of the claims 2 to 8, wherein the track (202) is closed and include a first track portion (205) for guiding the carriage (100) from the path initial point (211) to the path final point (212) and a second track portion (206) for guiding the carriage (100) from path final point (212) to the path initial point (211).

10. The additive manufacturing apparatus (10) according to any of the previous claims, wherein the manufacturing tool (110) is a Wire Arc Additive Manufacturing (WAAM) tool or a Plasma Arc Additive tool or a Manufacturing or Laser Wire Additive Manufacturing tool or Laser Powder Additive Manufacturing tool.

11. The additive manufacturing apparatus (10) according to any of the previous claims, wherein the guide (200) comprises at least a first switch (251) for activating the manufacturing tool (110) at the path initial point (211) and at least a second switch (252) for deactivating the manufacturing tool (110) at the path final point (212).

12. A method for additive manufacturing comprising the steps of:
- providing at least one carriage (100) having an additive manufacturing tool (110) for depositing a metallic material on a deposition surface (500),
- guiding the carriage (100) along at least one guiding path (210) from a path initial point (211) to a path final point (212), the distance between the additive manufacturing tool (110) and the deposition path (510) being held constant, the additive manufacturing tool (110) being activated for depositing a first layer of metallic material,
- changing the distance between the additive manufacturing tool (110) and the deposition surface (500) and repeating at least one time the previous step for depositing at least a second layer of metallic material, in order to form a metallic object (400) comprising a plurality of layers, each layer being deposited over a previous layer.

13. The method according to claim 12, wherein the method comprises the step of guiding the carriage (100) from the path final point (212) to the path initial point (211).

14. The method according to claim 12 or 13, wherein at least two guiding paths (210) are used for manufacturing two respective portions (401, 402) of the metallic object (400).

15. The method according to claim 14, wherein the same carriage (100) is guided along the two guiding paths (210) in series or at least two different carriages (100) are respectively guided along the at least two different guiding paths (210) .
